# EUROPÄISCHE PATENTSCHRIFT

(11) **EP 1 590 727 B1**
(45) Veröffentlichungstag und Bekanntmachung des Hinweises auf die Patenterteilung: **31.05.2006**
(21) Anmeldenummer: 03785953.5
(22) Anmeldetag: 29.12.2003
(51) Int. Cl.: G06F 1/12

(54) **ASYNCHRONE HÜLLSCHALTUNG FÜR EINE GLOBAL ASYNCHRONE, LOKAL SYNCHRONE (GALS) SCHALTUNG**
ASYNCHRONOUS WRAPPER FOR A GLOBALLY ASYNCHRONOUS, LOCALLY SYNCHRONOUS (GALS) CIRCUIT
CIRCUIT D'ENVELOPPE ASYNCHRONE DESTINE A UN CIRCUIT GLOBALEMENT ASYNCHRONE LOCALEMENT SYNCHRONE

(30) Priorität: 24.01.2003 DE 10303673
(43) Veröffentlichungstag der Anmeldung: 02.11.2005
(73) Patentinhaber: IHP GmbH - Innovations for High Performance Microelectronics/Institut für innovative Mikroelektronik, 15236 Frankfurt (Oder) (DE)
(72) Erfinder: GRASS, Eckhard, 12589 Berlin (DE); KRSTIC, Milos, 15232 Frankfurt / Oder (DE)
(74) Vertreter: Eisenführ, Speiser & Partner
(86) Internationale Anmeldenummer: PCT/EP2003/014959
(87) Internationale Veröffentlichungsnummer: WO 2004/066526

(56) Entgegenhaltungen:
- NJOLSTAD T ET AL: "A socket interface for gals using locally dynamic voltage scaling for rate-adaptive energy saving" IEEE, 12. September 2001 (2001-09-12), Seiten 110-116, XP010560765
- MUTTERSBACH J ET AL: "Practical design of globally-asynchronous locally-synchronous systems" ADVANCED RESEARCH IN ASYNCHRONOUS CIRCUITS AND SYSTEMS, 2000. (ASYNC 2000). PROCEEDINGS. SIXTH INTERNATIONAL SYMPOSIUM ON EILAT, ISRAEL 2-6 APRIL 2000, LOS ALAMITOS, CA, USA,IEEE COMPUT. SOC, US, 2. April 2000 (2000-04-02), Seiten 52-59, XP010377337 ISBN: 0-7695-0586-4
- BORMANN D S ET AL: "Asynchronous wrapper for heterogeneous systems" COMPUTER DESIGN: VLSI IN COMPUTERS AND PROCESSORS, 1997. ICCD '97. PROCEEDINGS., 1997 IEEE INTERNATIONAL CONFERENCE ON AUSTIN, TX, USA 12-15 OCT. 1997, LOS ALAMITOS, CA, USA,IEEE COMPUT. SOC, US, 12. Oktober 1997 (1997-10-12), Seiten 307-314, XP010251752 ISBN: 0-8186-8206-X
- SHENGXIAN ZHUANG ET AL: "Asynchronous data communication with low power for GALS systems" IEEE, Bd. 2, 15. September 2002 (2002-09-15), Seiten 753-756, XP010614458

## Beschreibung

Die Erfindung betrifft eine asynchrone Hüllschaltung für eine global asynchrone, lokal synchrone (GALS) Schaltung. Sie betrifft weiterhin eine GALS-Schaltung und ein Verfahren zum Takten eines intern synchronen Schaltungsblocks.

Hochintegrierte Halbleiterbauelemente für die drahtlose Kommunikation beinhalten heute digitale wie analoge Schaltkreise zur Daten- und Signalverarbeitung auf einem Chip. Digitale signalverarbeitende Schaltungen werden mit Hilfe dezidieter datenpfad-orientierter Schaltungen implementiert. Alternativ ist eine Implementierung mit einem DSP (Digitaler Signal-Prozessor) möglich. Ein System mit Datenpfad-Architektur weist typischerweise komplexe Schaltkreisblöcke auf, die aufwendige arithmetische oder trigonometrische Operationen durchführen. In einem 5 GHz-Modem für den drahtlosen Betrieb in einem LAN (local area network) entsprechend dem Standart IEEE 802.11a sind beispielsweise ein FFT/IFFT (fast fourier transform/ invertide FFT)-Prozessor, ein Viterbi-Dekodierer, ein CORDIC-Prozessor sowie Kreuz- und Autokorrelatoren enthalten. Die Kommunikation zwischen diesen Blöcken erfolgt mit hohen Datenraten. Dabei folgen häufig Perioden langer Inaktivität auf Zeitabschnitte mit hohem Datendurchsatz.

Ein wesentliches technisches Problem moderner ASICs (application specific integrated circuits) ist die Synchronisierung der unterschiedlichen, auf einem Chip integrierten Funktionsblöcke. Die Verwendung eines globalen Zeittaktes für alle Funktionsblöcke ist im Design nur mit großem Aufwand zu verwirklichen. Darüber hinaus erzeugt ein synchroner, globaler Zeittakt erhöhte elektromagnetische Interferenz (EMI). Dies erschwert die Integration analoger und digitaler Schaltungen auf einem Chip.

Zur Lösung der oben genannten Probleme wurden in jüngerer Zeit so genannte global asynchrone lokal synchrone (GALS) Schaltungsarchitekturen vorgeschlagen. Synchron arbeitende Schaltungen triggem alle Speicheroperationen gemäß einem gemeinsamen Zeitraster, das durch den Status eines globalen Signals definiert wird. Dieses Signal wird als Takt bezeichnet. Üblicherweise wird die Anstiegsflanke des Takt-Signals zum Triggern von Speicheroperationen verwendet. Der Nachteil synchron arbeitender Schaltungen besteht darin, dass die Grundannahme, dass das Takt-Signal allen Schaltungsteilen zum selben Zeitpunkt - also synchron - zur Verfügung steht, in der Realität nicht zutrifft. Dies ist durch die Signal-Ausbreitungszeit bedingt.

Asynchrone Schaltungen verzichten auf ein Zeitraster mit diskreten Zeitschritten. Die Funktion asynchroner Schaltungen basiert auf dem Eintreten von Ereignissen. Der momentane Zustand der Schaltung wird vollständig durch die Polarität von Signaländerungen und deren Reihenfolge bestimmt.

GALS-Schaltungen weisen Schaltungsblöcke auf, die intern synchron arbeiten. Diese lokal synchronen Schaltungsblöcke kommunizieren miteinander in asynchroner Weise, das heißt, mit Hilfe eines Handshake-Protokolls. Daher entfällt die Notwendigkeit, die einzelnen lokal synchronisierten Schaltungsblöcke auch global miteinander zu synchronisieren. Solange jeder einzelne lokal synchrone Block dem Handshake-Protokoll folgt, können diese Schaltungsblöcke in beliebiger Weise mit einander kombiniert werden.

Eine GALS-Architektur zeichnet sich durch eine modulare Struktur aus, die eine hohe Flexibilität des Schaltungsdesigns ermöglicht. Denn da die Schnittstelle zu jedem lokal synchronen Schaltungsmodul asynchron ist, können beliebige synchrone Schaltungen miteinander integriert werden. Jeder lokal synchrone Schaltungsblock kann ein Zeitraster mit individueller TaktSignalfrequenz aufweisen.

Zur Umsetzung der asynchronen Kommunikation zwischen den lokal synchronen Schaltungsblöcken weisen diese jeweils eine asynchrone Hüllschaltung auf, die auch als "asynchronous wrapper" bezeichnet wird. Eine asynchrone Hüllschaltung weist Eingangs- und Ausgangsports sowie einen lokalen Takt-Signalgenerator auf. Jeder Port der Hüllschaltung, das heißt, jeder Eingang und jeder Ausgang weist eine zugehörige Port-Steuerung auf, die für die Umsetzung des Handshake-Protokolls zuständig ist. Port und Steuerung bilden zusammen eine Eingangs- bzw. Ausgangseinheit.

Der Taktsignal-Generator einer asynchronen Hüllschaltung ist zur Erzeugung des Takt-Signals mit einer in einem bestimmten Frequenzbereich abstimmbaren Signalfrequenz ausgebildet. Ein wichtiges Merkmal von Takt-Signal-Generatoren für asynchrone Hüllschaltungen ist, dass die Erzeugung des Takt-Signals aussetzbar (pausable) ist.

In der Schrift Jens Muttersbach et al, "Practical Design of Globally-Asychronous Locally-Synchronous Systems", Advanced Research in Asynchronous Circuits and Systems, IEEE, April 2000 wird der Entwurf von GAL-Schaltungen mit aussetzbaren Takten beschrieben.

Shengxian Zhuang et al, beschreiben in ihrem Artikel "Asychronous Data Communication with Low Power for GALS Systems", IEEE, September 2002 eine Hüllschaltung mit "stretchable" intemem Takt und die Verlustleistungsoptimierung mit einem "low-swing" bus.

Aus der Schrift Tormod Njolstad et al, "A Socket Interface for GALS using Locally Dynamic Voltage Scaling for Rate-Adaptive Energy Saving", IEEE, September 2001 ist eine Hüllschaltung mit Anpassung des lokalen Taktes an die erforderliche Datenverarbeitungsrate und das Aussetzen des lokalen Taktes mit einem "timer" bekannt.

Aus der Schrift David S. Bormann, Peter Y. K. Cheoung, Asynchronous Wrapper for Heterogeneous Systems, In Proc. International Conf. Computer Design (ICCD), October 1997, Seiten 307 bis 314 ist eine asynchrone Hüllschaltung mit einer Eingangseinheit, einer Ausgangseinheit und einem Taktsignalgenerator bekannt. Gleichzeitig beschreibt diese Schrift ein Verfahren zum Takten eines intern synchronen Schaltungsblocks einer integrierten Schaltung mit Hilfe einer asynchronen Hüllschaltung. Eingangseinheit oder Ausgangseinheit erzeugen und senden ein "Stretch"-Signal an den Taktsignalgenerator, wenn am Eingang ein Anforderungssignal eines benachbarten vorangehenden Schaltungsblocks empfangen wurde bzw. am Ausgang ein Anforderungssignal an einen benachbarten nachfolgenden Schaltungblock gesendet wurde. Das "Stretch"-Signal liegt an einem Steuereingang des Taktsignalgenerators an, bis ein Handshake zum Datenaustausch mit einer benachbarten Schaltung erfolgt ist. Solange das Stretch-Signal anliegt, wird die Abgabe des nächsten Taktsignals vom Taktsignalgenerator an den synchronen Schaltungsblock verzögert. Auf diese Weise können Schaltungsblöcke individuell intern synchron getaktet werden und zugleich asynchron mit Schaltungsblöcken der Umgebung Daten austauschen.

Nachteilig ist, dass diese asynchrone Hüllschaltung für nicht näher spezifizierte Anwendungen ausgelegt ist und daher nicht an im Einzelfall vorgegebene Schaltungs-Umgebungen angepasst ist. Dies gilt insbesondere mit Blick auf für einen GALS-Block erforderliche Leistungsaufnahme. Mechanismen zum Verringern der Leistungsaufnahme sind mit den bekannten asynchronen Hüllschaltungen nur schwer zu realisieren.

Das der vorliegenden Erfindung zugrunde liegende technische Problem ist es, eine asynchrone Hüllschaltung anzugeben, die die Realisierung eines GALS-Blocks mit geringer Leistungsaufnahme ermöglicht.

Gemäß einem ersten Aspekt der Erfindung wird als Lösung des technischen Problems eine asynchrone Hüllschaltung angegeben mit mindestens einer Eingangseinheit, die ausgebildet ist, ein Anforderungssignal von extern zu empfangen und den Empfang des Anforderungssignals durch Abgabe eines zugeordneten Bestätigungssignals nach extern anzuzeigen, einer aussetzbaren Takteinheit, die ausgebildet ist, ein erstes Taktsignal wiederholt zu erzeugen und an einen der asynchronen Hüllschaltung zugeordneten, intern synchronen Schaltungsblock abzugeben, wobei die Eingangseinheit ausgebildet ist, auf den Empfang eines Anforderungssignals hin ein mit dem Anforderungssignal in definierter zeitlicher Beziehung stehendes zweites Taktsignal zu erzeugen und an den intern synchronen Schaltungsblock abzugeben, und wobei eine mit der Eingangseinheit verbundene Timeout-Einheit vorgesehen ist, die ausgebildet ist, die Abgabe des ersten Taktsignals zu unterdrücken.

Die Erfindung beruht auf der Erkenntnis, dass ein GALS-Block zur Verarbeitung eines kontinuierlichen Datenstroms in einem quasi-synchronen Betrieb am effektivsten arbeitet. Ein quasi-synchroner Betrieb lässt sich erfindungsgemäß realisieren, in dem ein GALS-Block in einem von Anforderungssignalen angetriebenen ("request driven") Betriebsmoduls betrieben wird. Der intern synchrone Schaltungsblock wird demnach immer dann getaktet, wenn tatsächlich Daten an seinem Eingang eintreffen. Anforderungssignale gehen bei einer asynchronen Hüllschaltung von extern, d.h., von einer benachbarten, im Datenfluss vorangehenden asynchronen Hüllschaltung ein, wenn Daten zur Eingabe an den lokalen, intern synchronen Schaltungsblock vorliegen.

Der Grundgedanke der erfindungsgemäßen Vorrichtung ist demnach in der Eingangseinheit verwirklicht, die zur Abgabe eines (im Anspruchswortlaut nur zur Unterscheidung als "zweites" benanntes) Taktsignals in definierter zeitlicher Beziehung zum eingegangenen Anforderungssignal ausgebildet ist. Die erfindungsgemäße Vorrichtung kann grundsätzlich auch ohne aussetzbare Takteinheit und ohne Time-out Einheit arbeiten. Dies hat zur Folge, dass sie allein mit Hilfe der zweiten Taktsignale getaktet wird. In Abwesenheit von Anforderungssignalen würde die lokal synchrone Schaltung in diesem Fall nicht getaktet. Dies hat zwar den Nachteil, dass in der Pipeline der synchronen Schaltung verbliebene Daten nicht ausgegeben werden. Doch mit einem erneuten Eintreffen von Anforderungssignalen würde die Ausgabe fortgesetzt. Die intern synchrone Schaltung wird zur Vermeidung dieses Nachteils gemäß Anspruch 1 mit Hilfe zweier alternativer Quellen getaktet, entweder mit Hilfe der Takteinheit, oder mit Hilfe der Eingangseinheit aufgrund von Anforderungssignalen. Man könnte auch von einem "Multiplexen" der ersten und zweiten Taktsignale sprechen. Die mit eingehenden Anforderungssignalen synchronisierte Taktung durch die "zweiten" Taktsignale hat grundsätzlich Priorität gegenüber der Taktung mit Hilfe "erster" Taktsignale von der Takteinheit. Dabei wird jedoch gewährleistet, dass eine Taktperiode eines "ersten" Taktsignals beendet wird, bevor ein "zweites" Taktsignal an den intern synchronen Schaltungsblock abgegeben wird.

Erfindungsgemäß wird ein zweites Taktsignal mit einem aktuell empfangenen Anforderungssignal synchronisiert, indem das zweite Taktsignal in definierter zeitlicher Beziehung zum Anforderungssignal erzeugt wird. Die definierte zeitliche Beziehung kann beispielsweise bedeuten, dass Anstiegsflanke und abfallende Flanke des zweiten Taktsignals in festem zeitlichen Abstand zur Anstiegsflanke und abfallenden Flanke des Anforderungssignals erzeugt werden. Bei Eintreffen eines Anforderungssignals, das im Rahmen eines kontinuierlichen Datenstroms eingeht, wird auf eine Taktung mit einem Taktsignal durch einen eigens vorgesehenen Taktgenerator verzichtet. Ein solcher Taktgenerator ist dennoch Bestandteil der asynchronen Hüllschaltung nach Anspruch 1, um bei Bedarf auch ohne anliegendes Anforderungssignal den intern synchronen Schaltungsblock antreiben zu können.

Die erfindungsgemäße Anordnung hat verschiedene Vorteile. Sie ermöglicht zunächst einen Verzicht auf einen globalen Taktbaum. Liegen keine Anforderungssignale von extern vor, ermöglicht die erfindungsgemäße Anordnung eine Taktung mit Hilfe der ersten Taktsignale nur bei Bedarf, also beispielsweise solang Daten zur Abgabe nach extern in der Pipeline der intern synchronen Schaltung vorhanden sind. Die erfindungsgemäße asynchrone Hüllschaltung ermöglicht daher eine geringe, am tatsächlichen Datenverarbeitungsbedarf orientierte Leistungsaufnahme eines GALS-Blocks. Weiterhin bestehen bei der Anordnung nach Anspruch 1 aufgrund der von Anforderungssignalen abhängigen Taktung nur wenige Randbedingungen für die Taktfrequenz des lokalen Taktgenerators, der die "ersten" Taktsignale erzeugt. Die Taktfrequenz eines lokalen Taktgenerators muss insbesondere nicht der Datenrate angepasst sein. Dies erlaubt eine einfache Gestaltung des Ringoszillators des lokalen Taktgenerators.

Bei einer ersten Ausführungsform der Erfindung ist die Timeout-Einheit ausgebildet, mit Ablauf einer vorbestimmten Zeitspanne nach Abgabe des letzten zweiten Taktsignals ein Steuersignal zum Freischalten der Abgabe des ersten Taktsignals abzugeben. Bei dieser Ausführungsform wird nach dem letzten Anforderungssignal eine so genannte Time-Out-Zeitspanne abgewartet, bevor die Taktung durch den lokalen Taktgenerator die Taktung durch eingehende Anforderungssignate ersetzt. Dies hat zum einen den Vorteil, dass die Tak- ' tung nicht unkontrolliert zwischen dem ersten und zweiten Taktsignal hin- und herspringt, wenn nur kurzzeitig kein Anforderungssignal anliegt. Zum anderen wird mit der Freischaltung des ersten Taktsignals ermöglicht, unabhängig vom Vorliegen eines Anforderungssignals die Pipeline der lokalen, intern synchronen Schaltung zu leeren und damit einen zusammenhängenden Datenfluss über mehrere GALS-Blöcke als solchen zu erhalten.

Eine zur ersten Ausführungsform alternative, zweite Ausführungsform beruht auf dem Gedanken, anstelle des Abwartens einer bestimmten Zeitspanne mit Hilfe der Time-Out-Einheit eine Ergänzung des Kommunikationsprotokolls zwischen den asynchronen Hüllschaltungen benachbarter GALS-Blöcken vorzusehen. Mit einem entsprechenden Signal zeigt bei dieser alternativen Ausführungsform die asynchrone Hüllschaltung des vorangehende GALS-Blocks an, dass ein aktuelles Anforderungssignal das vorerst letzte Anforderungssignal ist. Bei dem Signal kann es sich um ein modifiziertes Anforderungssignal oder um ein separates, parallel mit einem Anforderungssignal zu übersendendes Signal handeln. Zum Aussenden des Signals kann beispielsweise die Ausgangseinheit der asynchronen Hüllschaltung ausgebildet sein. Die entsprechende schaltungstechnische Umsetzung ist dem Fachmann an sich bekannt. Die Eingangseinheit ist entsprechend zum Empfang des Signals ausgebildet. Sie kann auch die in der ersten Ausführungsform von der TimP-Out-Einheit ausgeübte Funktion der Abgabe des Freischaltsignals für das erste Taktsignal wahrnehmen.

Zur Optimierung der Leistungsaufnahme sollte in der ersten wie der zweiten Ausführungsform eine Taktung mit Hilfe des ersten Taktsignals nur so lange erfolgen, wie Daten in der Pipeline vorhanden sind. Bevorzugt ist daher eine mit der Takteinheit und mit der Eingangseinheit verbundene Taktsteuereinheit vorgesehen, welche ausgebildet ist, die Takteinheit zur Abgabe einer Anzahl von Taktimpulsen anzutreiben, wobei die Anzahl der Taktimpulse kleiner oder gleich der Tiefe einer Pipeline des zugeordneten, intern synchronen Schaltungsblockes ist. Auf diese Weise kann die Taktung der intern synchronen Schaltung nach Leeren der Pipeline unterbrochen werden, bis erneut Anforderungssignale vorliegen.

Zum Aussetzen oder Unterbrechen der Taktung mit Hilfe des ersten Taktsignals ist die Taktsteuereinheit bevorzugt ausgebildet, der Takteinheit nach Abgabe der genannten Anzahl von Taktimpulsen ein Steuersignal zum Anhalten zu senden.

Die Eingangseinheit ist bei der erfindungsgemäßen asynchronen Hüllschaltung vorzugsweise ausgebildet, bei Anliegen eines Anforderungssignals ein Steuersignal an den intern synchronen Schaltungsblock zum Freischalten einer Dateneingabe abzugeben. Es können mehrere Eingangseinheiten vorgesehen sein. Dies ist beispielsweise sinnvoll, wenn der GALS-Block eingangsseitig mit mehreren anderen GALS-Blöcken verbunden ist.

Ebenso können eine oder mehrere Ausgangseinheiten vorgesehen sein, die ausgebildet sind, ein Anforderungssignal nach extern zu senden und auf den Empfang eines Bestätigungssignals von extern hin ein Steuersignal an den intern synchronen Schaltungsblock zum Freischalten einer Datenausgabe abzugeben.

Bevorzugt erfolgt die Kommunikation zwischen einer Ausgangseinheit eines ersten GALS-Blocks einerseits und einer verbundenen Eingangseinheit eines zweiten GALS-Blocks über ein dem Fachmann an sich bekanntes vierphasiges Handshake-Protokoll. Die Eingangseinheit und die Ausgangseinheit sind bevorzugt jeweils ausgebildet, mit Hilfe des vierphasen Handshake-Protokolls zu kommunizieren.

Mit Hilfe der erfindungsgemäßen asynchronen Hüllschaltung lassen sich GALS-Blöcke mit einem intern synchronen Schaltungsblock und einer asynchronen Hüllschaltung realisieren. Aus verschiedenen solcher GALS-Blöcke lassen sich in hochintegrierten Schaltungen GALS-Architekturen realisieren, umfassend mindestens einen intern synchronen Schaltungsblock und je eine zugeordnete asynchrone Hüllschaltung.

In einem erfindungsgemäßen GALS-Block ist vorzugsweise einem Dateneingang des intern synchronen Schaltungsblocks ein Daten-Latch vorgeschaltet ist, dessen Betrieb von der Eingangseinheit gesteuert wird. Dieser dient zum einen in bekannter Weise zum Puffern eingehender Daten. Zum andern verhindert der Daten-Latch das Auftreten metastabiler Zustände am Eingang des intern synchronen Schaltungsblocks.

Gemäß einem zweiten Aspekt der Erfindung wird zur Lösung des oben genannten Problems ein Verfahren zum Takten eines intern synchronen Schaltungsblocks einer integrierten Schaltung mit Hilfe einer asynchronen Hüllschaltung vorgeschlagen, wobei der intern synchrone Schaltungsblock mit Hilfe eines ersten Taktsignals getaktet werden kann, das ein lokaler Taktsignalgenerator erzeugen kann. Das erfindungsgemäße Verfahren hat folgende Schritte:
a) Aussetzen der Abgabe des ersten Taktsignals oder Abschalten des lokalen Taktgenerators
b) Warten auf den Empfang eines Anforderungssignals von extern am Eingang der asynchronen Hüllschaltung
c) Abgabe eines zweiten Taktsignals von der asynchronen Hüllschaltung an den intern synchronen Schaltungsblock in definierter zeitlicher Beziehung zum Empfang des Anforderungssignals und ohne Hilfe des lokalen Taktsignalgenerators,
d) Warten auf den Empfang eines nächsten Anforderungssignals von extern und gegebenenfalls Wiederholen des vorangegangenen Schrittes.

Das erfindungsgemäße Verfahren bricht mit dem im Zusammenhang mit GALS-Architekturen gängigen asynchronen Taktverfahren, bei dem das lokale Taktsignal bedarfsweise verzögert werden kann. Es schlägt an Stelle dessen eine am Vorliegen eines Anforderungssignals orientierte Taktung vor. Das lokale (erste) Taktsignal wird ausgesetzt oder der lokale Taktsignalgenerator wird abgeschaltet. Aus einem eintreffenden externen Anforderungssignal wird ein Taktsignal, das im Kontext der vorliegenden Anmeldung als "zweites Taktsignal" bezeichnet wird, für den lokal synchronen Block direkt abgeleitet.

Der lokale Taktgenerator dient ausschließlich dazu, interne Pipelinestufen der lokal synchronen Schaltung zu leeren, wenn über einen bestimmten Zeitraum kein externes Anforderungssignal anliegt. Die Vorteile des Verfahrens ergeben sich unmittelbar aus dem zur erfindungsgemäßen asynchronen Hüllschaltung Gesagten.

Ein Ausführungsbeispiel des erfindungsgemäßen Verfahrens beinhaltet bei Ausbleiben eines Anforderungssignals über eine vorbestimmbare Zeitspanne ein Umschalten auf die Abgabe des mit Hilfe des lokalen Taktsignalgenerators erzeugten ersten Taktsignals. Bei diesem Ausführungsbeispiels wird der lokale Taktsignalgenerator bevorzugt nach Leeren einer Pipeline des intern synchronen Schaltungsblocks oder nach dem Eintreffen eines neuen Anforderungssignals wieder abgeschaltet. Die Vorteile dieser Ausführungsbeispiele des erfindungsgemäßen Verfahrens ergeben sich ebenfalls aus der Beschreibung der erfindungsgemäßen Vorrichtung.

Weitere Merkmale und Vorteile der Erfindung werden nachfolgend anhand der Beschreibung von Ausführungsbeispielen anhand der beiliegenden Figuren verdeutlicht. Es zeigen:
- Figur 1: ein Blockschaltbild eines Ausführungsbeispieles einer asynchronen Hüllschaltung,
- Figur 2: ein detailliertes Blockschaltbild der asynchronen Hüllschaltung aus Figur 1,
- Figur 3: ein Schaltbild des Takt-Signal-Generators aus Figur 2,
- Figur 4: ein Schaltdiagramm der Takt-Steuerung aus Figur 2,
- Figur 5: ein Blockschaltbild des Time-Out-Detektors aus Figur 2,
- Figur 6: ein Blockdiagramm des Eingangs der Hüllschaltung aus Figur 2,
- Figur 7: eine Spezifizierung einer Eingangssteuerung des Eingangs der Hüllschaltung aus Figur 2,
- Figur 8: ein Blockdiagramm des Ausgangs der Hüllschaltung der Figur 2,
- Figur 9: eine Spezifizierung einer Ausgangssteuerung des Ausgangs der Figur 8,
- Figur 10: ein Diagramm mit einer Darstellung des zeitlichen Verlaufs verschiedener Signale in unterschiedlichen Betriebsarten der asynchronen Hüllschaltung und
- Figur 11: ein Blockschaltbild eines Anwendungsbeispiels in Form eines Basisband-Senders für die drahtlose Kommunikation

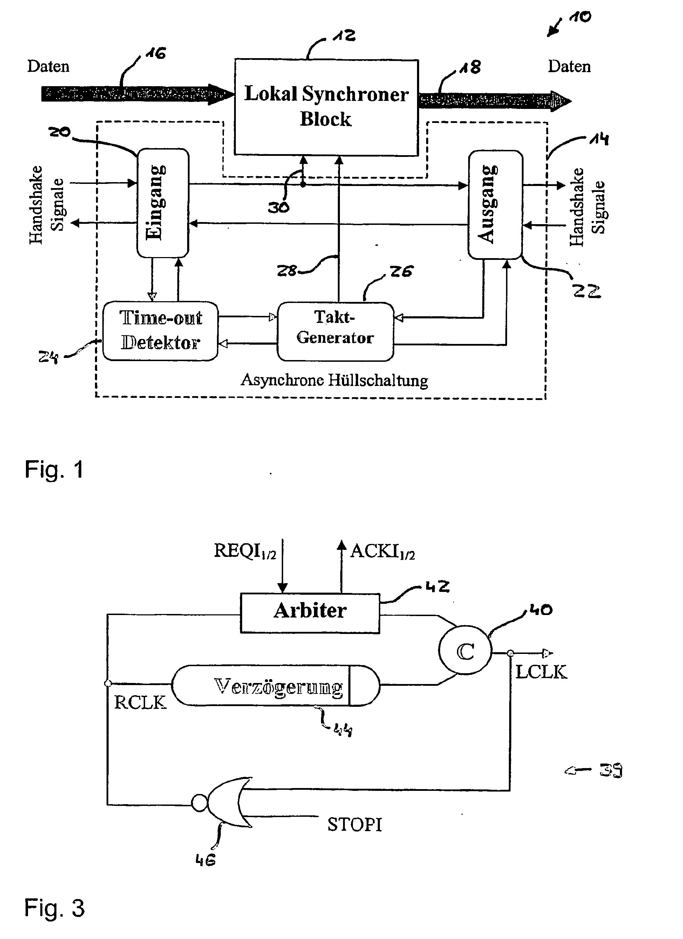

Figur 1 zeigt ein vereinfachtes Blockdiagramm einer Schaltung 10, die einen lokal synchronen Block 12 und eine asynchrone Hüllschaltung 14 aufweist. Der lokal synchrone Block 12 hat hier nicht näher beschriebene Eingänge und Ausgänge für Daten, die mit benachbarten Schaltungsblöcken ausgetauscht werden. Dies ist durch Pfeile 16 und 18 symbolisiert.

Die asynchrone Hüllschaltung der Schaltung 10 hat einen Eingang 20 zum Empfangen und Aussenden von Handshake-Signalen. Der Eingang kommuniniziert mit Hilfe der Handshake-Signale beispielsweise mit einem Ausgang einer im Datenfluss vorangehenden, benachbarten, gleichartigen asynchronen Hüllschaltung, die nicht dargestellt ist. Mit dem Eingang 20 verbunden ist ein Ausgang 22, der in analoger Weise Handshake-Signale mit der Umgebung austauscht. Beispielsweise kommuniziert der Ausgang 22 mit einem Eingang einer im Datenfluss nachfolgenden, benachbarten, gleichartigen asynchronen Hüllschaltung, die ebenfalls nicht dargestellt ist. Ein Time-Out-Detektor 24 ist einerseits mit dem Eingang 20 und andererseits mit einem Takt-Signalgenerator 26 verbunden. Die Verbindung des Takt-Signalsgenerators 26 mit dem Time-Out-Detektor 24 erfolgt über Steuereingänge. Ebenso ist der Takt-Signalgenerator 26 mit dem Ausgang 22 über Steuerein- und -ausgänge verbunden.

Die Verbindung des lokal synchronen (in dieser Anmeldung auch als intern synchron bezeichneten) Blocks 12 mit der asynchronen Hüllschaltung 14 erfolgt über Steuerleitungen 28 und 30. Über die Steuerleitungen 28 und 30 werden dem lokal synchronen Block 12 ein Takt-Signal des Takt-Signalgenerators 26 bzw. Anforderungssignale externer Schaltungen vom Eingang 20 her zugeleitet.

Die lokal synchrone Schaltung 12 wird demnach sowohl von eingehenden Anforderungssignalen externer Schaltungen als auch durch das lokale Takt-Signal angetrieben. Ein Anforderungssignal, das über den Eingang 20 geleitet wird, stammt von einer asynchronen Hüllschaltung eines benachbarten Schaltungsblockes. Es ist mit Daten synchronisiert, die den lokal synchronen Block 12 über die Datenleitung 16 erreichen.

Das hinter dem vorliegenden Ausführungsbeispiel stehende Konzept beruht auf einem verteilten Steuerungsmechanismus, der als Datenfluss-Ansatz (Token Flow Approach) bezeichnet wird. Jeder lokal synchrone Block 12 verschiedener in einem System zusammengefasster Schaltungen 10 weist eine eigene asynchrone Hüllschaltung auf. Diese asynchrone Hüllschaltung sendet zusätzlich Signale an benachbarte Hüllschaltungen, die über den momentanen Zustand der Hüllschaltung Auskunft geben. Als Token wird in diesem Zusammenhang die Kombination einer Dateneinheit mit einer Information zur Gültigkeit dieser Dateneinheit bezeichnet. Die benachbarten Hüllschaltungen betreiben ihren jeweiligen lokal synchronen Block 12 in Abhängigkeit von diesem Signal. Zusätzlich erzeugen die Module, die zu einem lokal synchronen Block gehören, ein weiteres Signal zur Übersendung an das funktionell nachfolgende Modul, das das Betriebsende anzeigt. In Abhängigkeit von diesem Signal akzeptiert das Modul die Daten des vorhergehenden Moduls und verarbeitet sie.

Liegt für eine vorbestimmte Zeitspanne kein Anforderungssignal am Eingang 20 an, wechselt die Hüllschaltung 14 in einen anderen Zustand, in dem sie interne Takt-Signale mit Hilfe eines weiter unten näher beschriebenen lokalen Ringoszillators erzeugt. Die Anzahl der intern erzeugten Takt-Signale wird so festgesetzt, dass sie gleich der Anzahl der Taktzyklen ist, die benötigt werden, um die Pipeline der lokal synchronen Schaltung 12 zu leeren. Sobald keine gültigen Daten mehr im synchronen Block sind, hält der Takt-Signalgenerator 26 an. Der lokal synchrone Block 12 ist anschließend inaktiv, bis ein nächstes Anforderungssignal eintrifft.

Das Eintreffen eines Anforderungssignals wird an einer Änderung des Zustandes am Eingang 20 detektiert. Üblicherweise wird hierbei der Nachweis einer ansteigenden Signalflanke als Eintreffen eines neuen Anforderungssignals interpretiert.

Wird am Eingang 20 ein Anforderungssignal detektiert, während der lokal synchrone Block nach Detektion eines Time-Outs vom lokalen Takt-Signalgenerator angetrieben wird, muss zunächst der aktuelle Takt-Zyklus beendet werden, um Metastabilität an den Dateneingängen des lokal synchronen Blocks 12 zu verhindern. Anschließend kann die Takt-Signalerzeugung vom lokalen Ringoszillator des Takt-Signalgenerators 26 auf die Eingangsleitung 30 übergeben werden. Zur Vermeidung von Metastabilität in der Handhabung dieser Situation sind weitere Schaltungen erforderlich, die weiter unten näher beschrieben werden.

Die hier vorgeschlagene Schaltungsarchitektur hat zahlreiche Vorteile. Wie in jedem GALS-System ist zunächst kein globaler Takt-Baum erforderlich. Das Takt-Signal wird durch ein "Multiplexen" des lokalen Takt-Signals und der Anforderungssignale erzeugt. Auf Grund des von Anforderungssignalen angetriebenen Betriebs muss die Frequenz des lokalen Takt-Signalgenerators nicht präzise mit der Frequenz eines globalen Takt-Signalgenerators oder mit der Datenrate übereinstimmen. Dies verringert die Zahl der Randbedingungen für das Design des Ringoszillators: Die vorliegende Implementierung erfordert weiterhin keine große Registerkapazität für Eingangsdaten im lokal synchronen Block 12. Dadurch wird eine unerwünschte Verzögerung vermieden und zugleich die Hardwarestruktur des Systems vereinfacht. Der lokal synchrone Block 12 antwortet bei dem hier vorgesehenen Konzept unmittelbar auf Anforderungssignale und vermeidet so Verzögerungen.

Ein weiterer Vorteil der Verwendung eines Datenfluss-Ansatzes in dem hier vorgeschlagenen Schaltungskonzept besteht darin, dass anstelle lokal synchroner Pipelines ebenso vollkommen asynchrone Schaltungen verwendet werden können, wenn dies gewünscht ist.

Schließlich bietet die vorliegende Architelctur einen effizienten Energiesparmechanismus. Ein jeweiliger synchroner Block 12 wird immer nur dann angetrieben, wenn an seinem Eingang Daten anliegen oder wenn das Austreiben der noch in der lokalen Pipeline verbliebenen Daten erforderlich ist. Zu allen anderen Zeitpunkten ist der lokal synchrone Block 12 außer Betrieb.

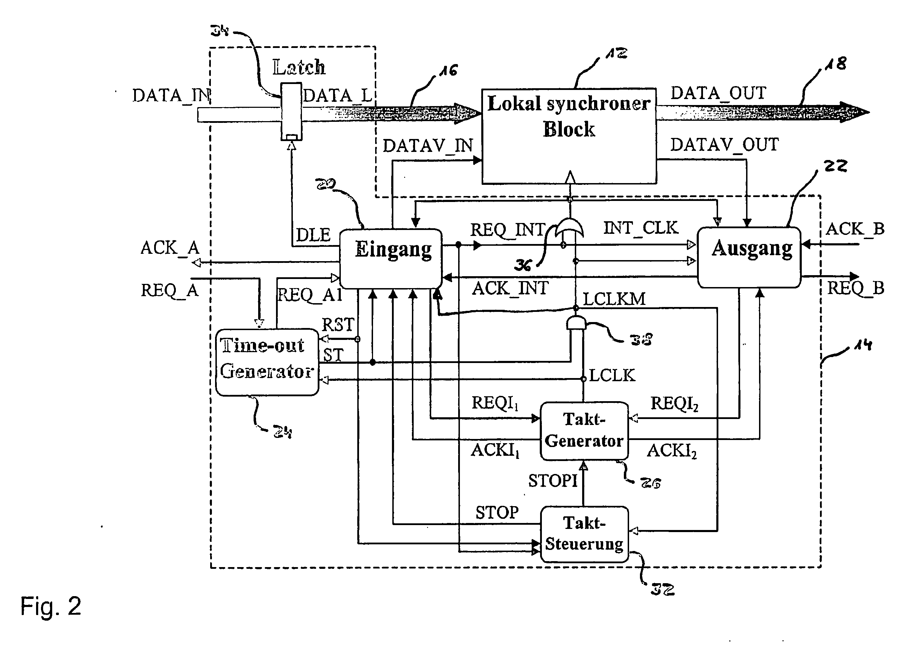

Figur 2 zeigt ein detailliertes Blockdiagramm des GALS-Blocks aus Figur 1. Die asynchrone Hüllschaltung 14 weist zusätzlich zu den in Figur 1 gezeigten Elementen eine Takt-Steuerung 32 und ein transparentes Latch 34 auf.

Die Funktion der asynchronen Hüllschaltung 14 wird nachfolgend anhand der Figuren 2 bis 9 in näheren Details erläutert. In Figur 2 sind neben den funktionellen Blöcken auch ihre Verbindungen sowie die auf den Verbindungen übertragenen Signale dargestellt. Die Verbindungslinien zeigen durch die Pfeilrichtung die Übertragungsrichtung der Signale an.

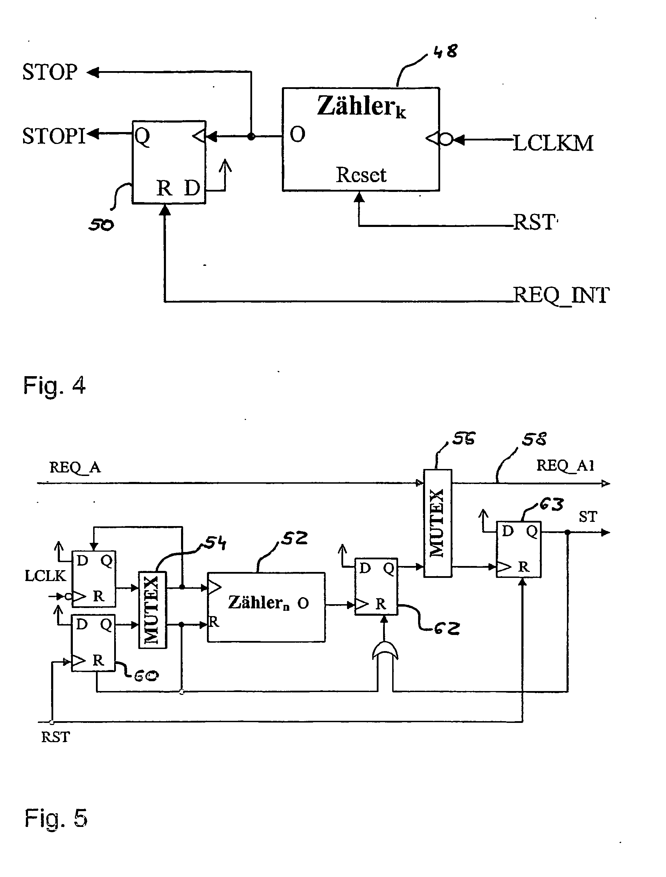

Die Taktung des lokal synchronen Moduls 12 erfolgt mit einem Signal *INT CLK.* Das Signal *INT_CLK* ist das Ausgangssignal eines ODER-Gatters 36 an dessen Eingängen zum einen ein Signal *REQ_INT* und zum anderen ein Signal LCLKM anliegt. Das Signal *REQ_INT* wird vom Eingang 20 erzeugt, wenn von extern ein Anforderungssignal *REQ_A* über den Time-Out-Generator 24 in Form eines weiteren Signals *REQ_A1* am Eingang empfangen wurde. Einzelheiten zur Struktur und Funktion des Time-Out-Generators 24 werden unten im Zusammenhang mit Figur 5 erläutert. Das Signal *LCLKM* ist das Ausgangssignal eines UND-Gatters 38, dessen zwei Eingänge zum einen mit dem Takt-Generator 26 und zum anderen mit dem Time-Out-Generator 24 verbunden sind. Die Funktion des UND-Gatters 38 besteht darin, dem Time-Out-Generator 24 durch ein Signal ST eine Steuerung der Weitergabe des Ausgangssignals LCLK des Takt-Generators 26 an das ODER-Gatter 36 zu ermöglichen.

Die Signale *REQ_INT* und *INT*_*CLK* schließen einander wechselseitig aus. Aus diesem Grunde ist das *INT*_*CLK-*Signal, das das lokal synchrone Modul 12 erreicht, stets eindeutig entweder auf Grund eines Anforderungssignals von extern oder auf Grund einer vom Time-Out-Generator 24 gesteuerten Taktung durch den Takt-Generator 26 erzeugt.

Über die Datenleitung 16 von extern eingehende Daten-Signale *DATA_IN* werden im transparenten Latch 34 gepuffert. Dies ist erforderlich, um einen metastabilen Zustand am Eingang des lokal synchronen Blocks zu vermeiden. Der Betrieb des Latch 34 wird mit einem Signal DLE gesteuert, wobei das Register transparent ist, wenn das Signal DLE anliegt. Das Signal DLE liegt an nach einer Signaländerung des Takt-Generators 26 wenn zuvor im Latch gespeicherte Daten schon in die Registerstufe des lokal synchronen Moduls 12 geschrieben wurden. Es ist nicht erforderlich, dass das lokal synchrone Modul 12 weitere Register aufweist. Die eingehenden Daten können direkt einem Logikblock (nicht gezeigt) zugeführt werden, der der ersten Registerstufe (ebenfalls nicht gezeigt) vorgeschaltet ist.

Nachfolgend wird die Struktur und die Funktion des aussetzbaren Takt-Generators 26 anhand der Figur 3 näher erläutert.

Der lokale Takt-Signalgenerator 26 hat einen Ringoszillator 39, der ein Müller-C-Element 40, eine Verzögerungsstrecke 44 und ein Oder-Gatter (mit nachgeschaltetem Inverter) 46 aufweist. Über zwei Steuereingänge erhält der Ringoszillator 29 Signale, zum einen von einem Arbiter 42 und zum anderen über einen zweiten Eingang des ODER-Gatters 46. An das ODER-Gatter 46 wird zum einen das Ausgangssignal LCLK des Ringoszillators rückgeführt. Zum anderen ist das ODER-Gatter 46 mit einem Ausgang der Takt-Steuerung 32 verbunden, über den ein Signal STOPI angelegt werden kann.

Mit Hilfe des Signals STOPI kann der Ringoszillator 39 angehalten werden. Das STOPI-Signal liegt in zwei Fällen an: Zum einen unmittelbar nach einem Reset, um das Aktivieren des Oszillators vor dem Eintreffen des ersten Anforderungssignals bei dem lokalen Block zu verhindern. Zum anderen, nach einem Time-Out, das heißt, wenn die Anzahl der lokalen Takt-Zyklen gleich der Anzahl von Zyklen ist, die notwendig ist, alle gültigen Daten innerhalb der Pipeline auszugeben. In dieser Situation wird das lokale Takt-Signal abgeblockt, um einen unnötigen Energieverbrauch zu verhindern.

Der Ringoszillator 39 kann drei Grund-Moden annehmen: Schlafmodus, Time-Out-Messmodus und Takt-Gemeratormodus. Im Schlafmodus blockiert ein Stopsignal STOPI den Betrieb des Takt-Generators 26. Im Time-Out-Messmodus ist der Eingangs-Handshake freigeschaltet und der Eingang wartet auf das Eintreten eines Time-Out-Ereignisses. Ein Time-Out-Ereignis ist das Fehlen eines Anfordernungssignals am Eingang für eine vorgegebene Zeitspanne (T_{Time-out}). Der Eingangs-Handshake wartet auch auf eine Signaländerung auf der Anforderungs-Signal-Leitung. Im vorliegenden Ausführungsbeispiel ist der Takt-Generator auch zur Erzeugung eines Time-Out-Signals ausgebildet. Der Takt-Generatormodus wird aktiviert, wenn ein Time-Out eingetreten ist. Das heißt, dass der lokal synchrone Block 12 dann getaktet wird, um alle gültigen Daten in der Pipeline auszugeben.

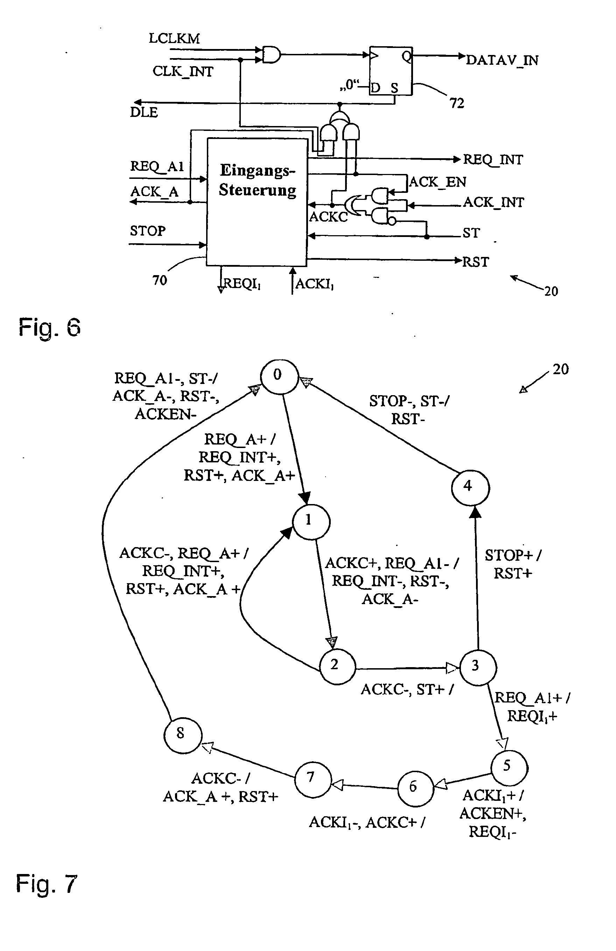

Figur 4 zeigt ein Blockdiagramm der Takt-Steuerung 32. Die Aufgabe der Takt-Steuerung 32 ist die Steuerung des Takt-Generators 26. Die Takt-Steuerung 32 erzeugt zwei Ausgangssignale: STOPI und STOP. Das Signal STOP ist ein Steuersignal für eine asynchrone Finite State Maschine (AFSM) einer Eingangssteuerung, die dem Eingang 20 zugeordnet ist. Hierauf wird weiter unten im Kontext der Figuren 6 und 7 näher eingegangen. Wenn das STOP-Signal anliegt, wird das lokale Takt-Signal angehalten. Das *STOP-*Signal wird aktiviert, wenn ein Zähler 48, der mit dem lokalen Takt-Signal getaktet wird eine Zahl erreicht, die gleich der Tiefe der synchronen Pipeline ist. Das Signal STOPI wird vom Signal STOP mit Hilfe eines zusätzlichen D-Flipflop 50 abgeleitet. Dieses Signal wird unmittelbar als Steuersignal für den Ringoszillator 39 des Takt-Generators verwendet. Das D-Flipflop dient dazu, dieses Signal im aktivierten Zustand zu halten, bis ein neues Anforderungssignal eintrifft.

Figur 5 zeigt ein Blockschaltbild des Time-Out-Detektors 24. Der Time-Out-Detektor 24. weist einen Zähler 52 auf. Der Zähler 52 zählt die Anzahl negativer, also abfallender Flanken des lokalen Takt-Signals. Dieser Zähler ist als ein Standard-Synchronzähler ausgelegt. Wenn er seinen letzten Wert erreicht, erzeugt er ein Time-Out-Signal. Das Reset-Signal RST wird während jedes Handshakes am Input-Port einmal aktiviert. Das RST-Signal und das Takt-Signal schließen einander nicht grundsätzlich aus. Diese Tatsache bürgt das Risiko eines metastabilen Verhaltens des Zählers 52. Zur Vermeidung von Metastabilität wird ein Ausschlusselement 54 (Mutual Exclusion Element MUTEX) dem Eingang des Zählers 52 vorgeschaltet. Das MUTEX-Element löst das gleichzeitige Auftreten einer ansteigenden Flanke des Takt-Signals und einer abfallenden Flanke des Reset-Signals. Auch ein dem Mutex-Element 54 vorgeschaltetes Flipflop 60 dient dem wechselseitig ausschließenden Auftreten eines Reset und eines LCLK-Signals am Eingang des Zählers 52.

Eine weitere problematische Situation ist das gleichzeitige Auftreten eines externen Anforderungssignals *REQ_A* und eines Time-Out-Signals. Ein solcher Zustand könnte den zu Grunde gelegten Burst-Modus-Betrieb verletzen und eine fehlerhafte Arbeitsweise der AFSM bewirken. Zur Lösung dieses möglichen Problems ist ein weiteres MUTEX-Element 56 vorgesehen. Um die Leitung für das Anforderungssignal *REQ_A1,* in Figur 5 mit dem Bezugszeichen 58 gekennzeichnet, die meiste Zeit verfügbar zu halten, sollte das Time-Out-Signal auf der Eingangsseite des MUTEX-Elementes 56 lediglich für eine sehr kurze Zeitspanne aktiv sein. Dieses Verhalten wird mit Hilfe zweier Flip-flops 62 und 63 erreicht. Der erste Flipflop 62 wird auf ein logisches "Hoch"-Signal ("1") gesetzt, wenn ein Time-Out auftritt, das heißt, wenn der Ausgang des Zählers 52 "1" ist. Wenn im Anschluss an die Arbitrierung ein Time-Out eingeleitet ist, wird der zweite Flipflop 63 getaktet. Das Takten des zweiten Flipflops 63 aktiviert das Signal ST. Dies wiederum führt zum Zurücksetzen des ersten Flipflops 62, was eine schnelle Weiterleitung eines externen Anforderungssignals *REQ_A* an die asynchrone Fine State Maschine (AFSM) im Eingang 20 ermöglicht.

Figur 6 zeigt ein Blockschaltbild des Eingangs 20. Der Eingang 20 weist eine Eingangssteuerung 70 auf, deren Ports in Figur 7 näher spezifiziert sind. Aufgabe der Eingangssteuerung 70 ist es, einen sicherein Datentransfer zu garantieren. Die Eingangssteuerung 70 ist als AFSM ausgebildet, die im Burst-Modus arbeitet.

Im normalen Betriebsmodus reagiert die Eingangssteuerung auf eingehende Anforderungssignale und initiiert mit Hilfe eines Signals *REQ_INT* die Abgabe eines Taktsignals für jedes eingehende Anforderungssignal.

Wenn auf den Eingangsleitungen für eine bestimmte Zeitspanne kein Anforderungssignal anliegt, wird ein Signal *ST* aktiviert (Time-Out). In diesem Zustand ist die Eingangssteuerung ausgebildet, auf zwei mögliche Ereignisse zu reagieren: Das erste mögliche Ereignis ist die Beendigung der erwarteten Anzahl interner Taktzyklen, die durch ein Signal *STOP* angezeigt wird. Dadurch wird die Eingangssteuerung 70 in ihrem anfänglichen Zustand zurückversetzt. Das zweite mögliche Ereignis ist das Eintreffen eines Anforderungssignals während der Ausgabe restlicher Daten in der Pipeline. In diesem Fall muss ein bereits begonnener lokaler Taktzyklus sicher beendet werden und die Steuerung des Taktsignals muss an das Anforderungssignal übergeben werden. Im vorliegenden Ausführungsbeispiel ist die Eingangssteuerung 70 mit einer Schaltung verbunden, die einem "breiten" Vier-Phasen Handshake-Protokoll folgt.

Die Eingangssteuerung 70 erzeugt einen Übergang auf eine Taktung mit Hilfe des Anforderungssignals nicht bevor die Hälfte eines Takt-Zyklus nach dem vorangehenden Übergang des Anforderungssignals.

Die weiteren Schaltungselemente, die in Figur 6 dargestellt sind, dienen dazu, während der lokalen Taktereugung mit Hilfe des Takt-Generators 26 ein vom Ausgang 22 erzeugtes Bestätigungssignal *ACK_INT* zu unterdrücken. *ACK*_*INT* wird freigeschaltet, wenn von der lokalen Taktereugung wieder auf die durch das Anforderungssignal angetriebene betriebsweise übergegangen wird. Dies geschieht durch Aktivieren eines Signals *ACK_EN.*

Ein Flipflop 72 ist vorgesehen, um ein für die Abgabe an das lokal synchrone Modul 12 vorgesehenes Signal *DATAV_IN* zu erzeugen, das anzeigt, dass aktuell gültige Daten am Eingang des lokal synchronen Moduls 12 anliegen.

Bei dem hier beschriebenen Eingang handelt es sich um einen Eingang vom "Pull-Typ". Auf ähnliche Weise kann ein Eingang vom "Push" konstruiert werden mit nur geringfügigen, dem Fachmann bekannten Modifikationen.

Zur ergänzenden Erläuterung des Graphs der Figur 7 ("Signal-Transition-Graph") sind nachfolgend sind die logischen Gleichungen aufgeführt, die den Ausgangssignalen der Eingangssteuerung 70 zu Grunde liegen. Dabei bezeichnet ein Hochstrich am Ende eines Signals die Inversion dieses Signals, ein Plus-Zeichen ein logisches "Oder" und ein Multiplikationszeichen ein logisches "Und".
- *REQ_INT* =: *REQ_*A*1·REQ_INT+ACKC'·REQ_INT+ REQ_A1·ACKC'·ST'·Z0'*
- *ACK_A* =: *ACKC'·REQ_INT* + *ST·ACK_A* + *REQ_*A*1·RST* + *REQ_A 1·A CKC'·Z0* + *REQ_A1·ACKC'-ST'·Z0'*
- *ACKEN* =: *ACKI*_{*1*} + *ACKC·ACKEN* + *ACKEN·Z0'*
- RST =: STOP + ACKC'·REQ_INT + REQ_A1·RST + ACKC'·ST·Z0 + REQ_A1·ACKC'·ST·Z0'
- REQI₁ =: REQ_A1·ST·ACKI₁'·ACKEN'·Z0'
- Z0 =: STOP+REQ_A1·Z0+ST·Z0+ACKC·ACKI₁'·ACKEN
- *Z1* =: *REQ_A1'·ACKC* + *ACKC·Z1* +*REQ_A1'·ST'·Z1*

*Z0* und *Z1* sind interne Signale, die einen fehlerfreien Betrieb der Eingangssteuerung 70 sicherstellen.

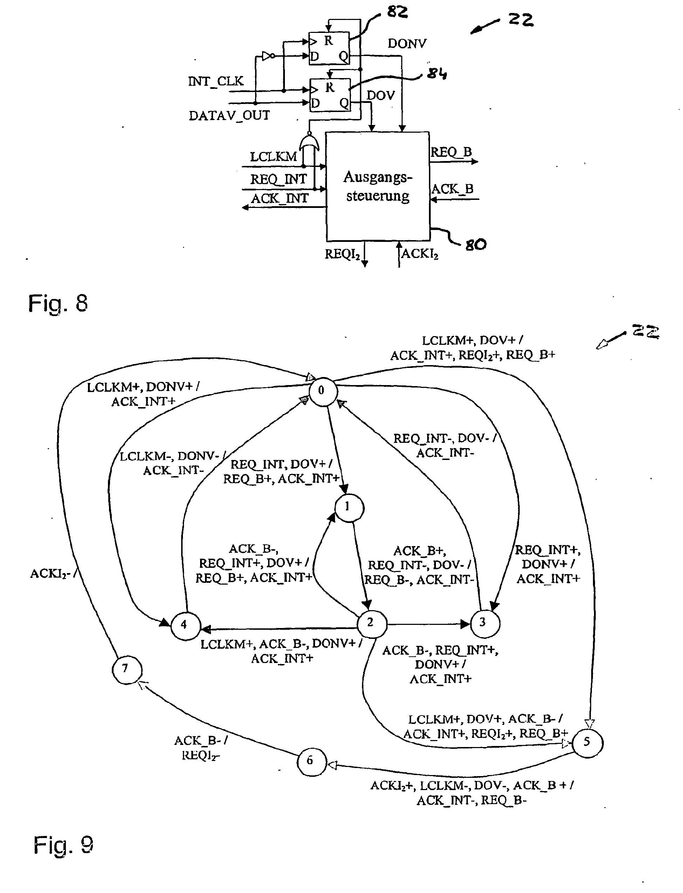

Nachfolgend wird anhand der Figuren 8 und 9 Struktur und Funktion des Ausgangs 22 erläutert. Figur 8 zeigt ein Blockdiagramm des Ausgangs 22. Der Ausgang 22 weist eine Ausgangssteuerung 80 in Form einer asynchronen Fine State Maschine (AFSM) und zwei Flip-Flops 82 und 84 auf. Die Flip-Flops 82 und 84 dienen dazu, die Signale zu konditionieren, die anzeigen, dass Ausgangsdaten gültig (*DOV*) oder nicht gültig *(DONV)* sind, um diese Signale entsprechend in der Ausgangssteuerung 80 weiterverwenden zu können. Da die AFSM des Ausgangs 20 ereignisgesteuert und nicht niveaugesteuert ist, wird das niveau-basierte Signal *DATAV_OUT* in zwei ereignisbasierte Signale *DOV* und *DONV* transformiert, indem sie mit Hilfe des in einem Verzögerungselement 86 verzögerten Signals *INT_CLK* geschaltet werden (im Sinne eines "strobing"). Die Ausgangssteuerung kann von zwei einander ausschließenden Quellen her angeregt werden: mit Hilfe des internen Anforderungssignals *REQ_INT* und mit Hilfe des lokalen Taktsignals *LCLKM.* Wenn keine gültigen Daten am Ausgang 20 anliegen, das heißt, *DONV akti*viert ist, wird jedes Anforderungssignal, das entweder durch Aktivierung des *REQ_INT* oder *LCLKM* angezeigt wird, sofort durch Aktivierung des Signals *ACK_INT* aktiviert. Wenn Ausgangsdaten zum nächsten GALS-Block übertragen werden müssen, das heißt, die *DOV* aktiviert ist, muss ein Ausgangs-Handshake mit Hilfe der Signale *REQ_B* und *ACK_B* durchgeführt werden. In diesem Fall muss der interne Handshake (Signale *REQ_INT* und *ACK_INT)* mit dem Ausgangs-Handshake (Signale *REQ_B* und *ACK_B)* gekoppelt werden. Wenn sowohl *DOV* aktiviert ist und das Signal *LCKLM* anliegt, muss der lokale Takt-Generator mit Hilfe der Signale *REQl*_{*2*} und *ACKl*_{*2*} verzögert werden, bis ein Ausgangs-Handshake durchgeführt ist. Dadurch wird das Anbrechen eines neuen Taktzyklus verhindert, bevor der Datentransfer am Ausgang beendet ist.

Die logischen Gleichungen für die Implementierung der asynchronen Finite State Maschine der Ausgangssteuerung 80 sind wie folgt:
- *REQ_B* =: *REQ_INT·REQ_B + ACK_B'·REQ_B + LCLKM·REQI*_{*2*} *+ A- CKI2'·REQI*_{*2*} *+ DOV·ACK_INT + LCLKM·AGK B'-DOV + REQ_INT·ACK_B'·DOV*
- *REQI*_{*2*} =: *ACK_B·REQI*_{*2*} + *REQI*_{*2*}*·ACK_INT + LCLKM·ACK_B'·DO*V
- *ACK_INT* =: *ACK_B'·REQ_B* + *ACKI2'·REQI*_{*2*} *+ LCLKM·ACK_NT + REQ_INT·ACK_INT + DOV*·*ACK_INT + DONV·ACK_INT + LCLKM· ACK_B'·DOV* + *REQ_INT·ACK_B'·DOV + LCLKM·ACK_B'·DONV + REQ_INT·ACK_B'·DONV*
- *Z0* =: *ACK_B + REQ_B + LCLKM·DOV + REQ_INT·DOV + A- CKI2'-DONV'·Z0 + LCLKM'-REQ_INT'-ACKI*_{*2*}*'·Z*0

*Z0* ist ein internes Signal, das zum sicheren Betrieb der *AFSM* hinzugefügt wurde. Der hier beschriebene Ausgangsport 22 ist vom "Push"-Typ. Die Struktur eines Ausgangsports vom "Pull"-Typ wäre sehr ähnlich.

Die hier anhand der Figuren 2 bis 9 erläuterte Schaltung erlaubt, dass während des Ausgebens von in der Pipeline verbliebenen Daten ein neues Anforderungssignal am Eingang 20 eintrifft. Dies führt zu einer deutlich komplizierteren Schaltungsstruktur und bedingt zusätzliche Steuer- und Bewertungsschaltungen. Für bestimmte Anwendungen kann die hier beschriebene Hüllschaltung daher deutlich vereinfacht werden.

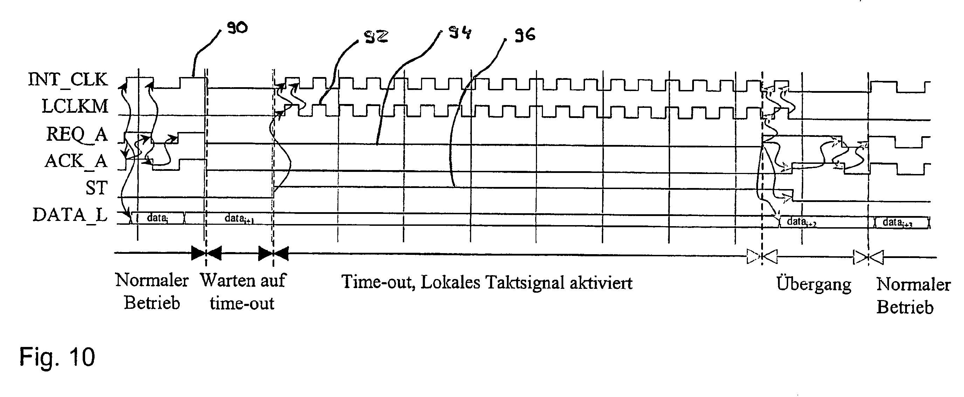

Figur 10 zeigt das Ergebnis einer Simulation des Betriebes der asynchronen Hüllschaltung aus Figur 2 für verschiedene Betriebsarten. Für die Simulation wurde als lokal synchrones Modul 12 ein 21stufiges FIFO-Register gewählt. Das simulierte Gesamtsystem besteht aus drei hintereinander geschalteten GALS-Blöcken. In Figur 10 sind die zeitlichen Verläufe verschiedener Signale dargestellt. In der obersten Zeile ist der zeitliche Verlauf des Signals *INT*_*CLK* anhand eines zeitlichen Signalverlaufs 90 dargestellt. Das Signal *INT_CLK* tritt innerhalb einer jeweiligen asynchronen Hüllschaltung auf. Hier ist ersichtlich, dass das *Signal INT_CLK* aus den Signalen *LCLKM* und *REQ_*A entsteht, wie dies auch schon im Zusammenhang mit Figur 2 erläutert wurde. Im normalen Betriebsmodus erfolgt ein Handshake auf den Leitungen *REQ_A* und *ACK_A.* Jedes Anforderungssignal wird als neuer Taktzyklus interpretiert. Wenn das Signal *REQ_A* auf 0 verbleibt, wartet die Hüllschaltung auf das Eintreten eines Time-Outs. Während des Wartens ist die interne Taktsignalerzeugung abgeschaltet. Das Eintreten eines Time-Outs wird mit einem Signal *ST* aktiviert. Dies veranlasst die Aktivierung des lokalen Taktsignals *LCLKM,* welches wiederum das Signal *INT_CLK* antreibt. Zeigt das Signal *REQ_A* 94 das Eintreffen von neuen Daten vor dem Deaktivieren von *LCLKM* an, wird ein Übergang eingeleitet. In diesem Modus wird ein lokaler Taktzyklus vollständig beendet und anschließend wird die Kontrolle über das interne Taktsignal auf die Anforderungsleitung *REQ_A* 94 gegeben. Schließlich wird zum normalen Betrieb übergegangen, der auch zu Beginn vorherrschte.

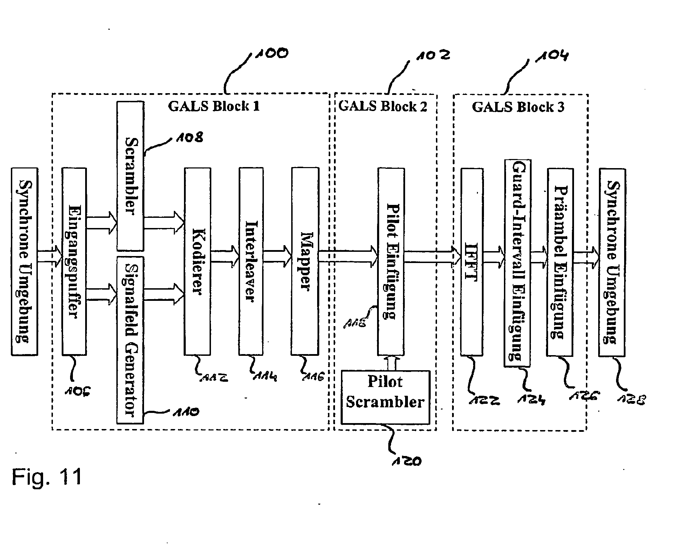

Figur 11 zeigt als Ausführungsbeispiel eines GALS-Systems einen Basisbandprozessor für ein auf einem Chip integriertes drahtloses Breitbandkommunikationssystem im 5 GHz-Band entsprechend dem Standart IEEE 802.11a. Dieser Standard spezifiziert ein Breitbandkommunikationssystem unter Verwendung von OFDM (Orthogenal Frequency Division Multiplexing) mit Datenraten im Bereich von 6 bis 54 Mbit/s. Der in Figur 11 dargestellte Basisband-Sender weist drei GALS-Blöcke 100, 102 und 104 auf. Jedem der GLS-Blöcke 100, 102 und 104 ist eine asynchrone Hüllschaltung zugeordnet, die hier in der funktionellen Darstellung des Basisband-Senders nicht gezeigt ist. Die Aufteilung der Blöcke folgt Überlegungen hinsichtlich der Funktionalität und der Komplexität der Funktionsblöcke des Basisband-Senders. Der erste GALS-Block 100 weist einen Eingangspuffer 106, einen Scrambler 108, einen Signalfeld-Generator 110, einen Codierer 112, einen Interleaver 114 und einen QAM-Mapper 116 auf. Die genannten Blöcke 106 bis 116 sind dem Fachmann an sich bekannt. Die umfangsreichsten Blöcke des GALS-Blocks 100 sind der Interleaver 114 und der Mapper 116. Der zweite GALS-Block weist eine Pilotkanal-Einfügungseinheit 118 und einen Pilot-Scrambler 120 auf. Der dritte GALS-Block 104 umfasst einen Block 122 zur Durchführung der inversen schnellen Fouriertransformation (Inverse fast fourier transform), eine gard Intervall-Einfügungseinheit 124 und eine Präambeleinfügungseinheit 126 auf. Die IFFT-Einheit 122 nimmt in etwa 85 % des Schaltungsaufwandes von GALS-Block 3 in Anspruch. Die beschriebenen synchronen Blöcke 100, 102 und 104 mit ihren Teilblöcken 106 bis 126 sind in einem Datenfluss-Stil (Token-Flow) aufgebaut. Ein Problem liegt darin, dass der dritte Block 104 Ausgangsdaten mit einer festgelegten Geschwindigkeit zur Weiterleitung an einen Digital-Analog-Wandler (nicht gezeigt) liefern muss. Dies wird erreicht, indem der lokale Oszillator des Blockes 104. auf eine Frequenz abgestimmt ist, die etwas größer ist als die feste Taktfrequenz des Digital-Analog-Wandlers. Die Ausgangsdaten werden dann praktisch aus dem lokal synchronen Block 104 mit der gewünschten Frequenz des Digital-Analog-Wandlers mit Hilfe des Signals ACK herausgezogen. Ein Test ergab einen Datendurchsatz von etwa 100 Msps zwischen GALS-Block 104 und der externen synchronen Umgebung 128.

## Patentansprüche

1. Asynchrone Hüllschaltung mit
- mindestens einer Eingangseinheit, die ausgebildet ist, ein Anforderungssignal von extern zu empfangen und den Empfang des Anforderungssignals durch Abgabe eines zugeordneten Bestätigungssignals nach extern anzuzeigen,
- einer aussetzbaren Takteinheit, die ausgebildet ist, ein erstes Taktsignal wiederholt zu erzeugen und an einen der asynchronen Hüllschaltung zugeordneten, intern synchronen Schaltungsblock abzugeben,
**dadurch gekennzeichnet,**
- **dass** die Eingangseinheit ausgebildet ist, bei Anliegen eines Anforderungssignals ein mit dem Anforderungssignal in definierter zeitlicher Beziehung stehendes zweites Taktsignal zu erzeugen und an den intern synchronen Schaltungsblock abzugeben, und
- **dass** eine mit der Eingangseinheit verbundene Timeout-Einheit vorgesehen ist, die ausgebildet ist, die Abgabe des ersten Taktsignals zugunsten der Abgabe des zweiten Taktsignals zu unterdrücken.

2. Asynchrone Hüllschaltung nach Anspruch 1, bei der die Timeout-Einheit ausgebildet ist, die Abgabe des ersten Taktsignals zugunsten der Abgabe des zweiten Taktsignals zu unterdrücken.

3. Asynchrone Hüllschaltung nach Anspruch 1 oder 2, bei der die Timeout-Einheit ausgebildet ist, mit Ablauf einer vorbestimmten Zeitspanne nach Abgabe des letzten zweiten Taktsignals ein Steuersignal zum Freischalten der Abgabe des ersten Taktsignals abzugeben.

4. Asynchrone Hüllschaltung nach einem der vorstehenden Ansprüche, die eine mit der Takteinheit und mit der Eingangseinheit verbundene Taktsteuereinheit aufweist, welche ausgebildet ist, die Takteinheit zur Abgabe einer Anzahl von Taktimpulsen anzutreiben, wobei die Anzahl der Taktimpulse kleiner oder gleich der Tiefe einer Pipeline des zugeordneten, intern synchronen Schaltungsblockes ist.

5. Asynchrone Hüllschaltung nach Anspruch 4, bei der die Taktsteuereinheit ausgebildet ist, der Takteinheit nach Abgabe der notwendigen Anzahl von Taktimpulsen ein Steuersignal zum Anhalten zu senden.

6. Asynchrone Hüllschaltung nach einem der vorstehenden Ansprüche, bei der die Eingangseinheit ausgebildet ist, bei Anliegen eines Anforderungssignals ein Steuersignal an den intern synchronen Schaltungsblock zum Freischalten einer Dateneingabe abzugeben.

7. Asynchrone Hüllschaltung nach einem der vorstehenden Ansprüche, mit mindestens einer Ausgangseinheit, die ausgebildet ist, ein Anforderungssignal nach extern zu senden und auf den Empfang eines Bestätigungssignals von extern hin ein Steuersignal an den intern synchronen Schaltungsblock zum Freischalten einer Datenausgabe abzugeben.

8. Asynchrone Hüllschaltung nach Anspruch 6 und 7, bei der die Eingangseinheit und die Ausgangseinheit ausgebildet sind, mit extern über ein vierphasiges Handshake-Protokoll zu kommunizieren.

9. Global asynchrone lokal synchrone (GALS-) Schaltung, umfassend mindestens einen intern synchronen Schaltungsblock und je eine zugeordnete asynchrone Hüllschaltung nach einem der vorstehenden Ansprüche.

10. GALS-Schaltung nach Anspruch 9, bei der einem Dateneingang des intern synchronen Schaltungsblocks ein Daten-Latch vorgeschaltet ist, dessen Betrieb von der Eingangseinheit gesteuert wird.

11. Verfahren zum Takten eines intern synchronen Schaltungsblocks einer integrierten Schaltung mit Hilfe einer asynchronen Hüllschaltung, wobei der intern synchrone Schaltungsblock mit Hilfe eines ersten Taktsignals getaktet werden kann, das ein lokaler Taktsignalgenerator erzeugen kann, mit den Schritten:
a) Aussetzen der Abgabe des ersten Taktsignals oder Abschalten des lokalen Taktgenerators
b) Warten auf den Empfang eines Anforderungssignals von extern am Eingang der asynchronen Hüllschaltung
c) Abgabe eines zweiten Taktsignals von der asynchronen Hüllschaltung an den intern synchronen Schaltungsblock in definierter zeitlicher Beziehung zum Empfang des Anforderungssignals und ohne Hilfe des lokalen Taktsignalgenerators,
d) Warten auf den Empfang eines nächsten Anforderungssignals von extern und gegebenenfalls Wiederholen des vorangegangenen Schrittes.

12. Verfahren nach Anspruch 11, bei dem bei Ausbleiben eines Anforderungssignals über eine vorbestimmbare Zeitspanne (time-out) ein Umschalten auf eine Abgabe des mit Hilfe des lokalen Taktsignalgenerators erzeugten ersten Taktsignals erfolgt.

13. Verfahren nach Anspruch 12, bei dem der lokale Taktsignalgenerator nach Leeren einer Pipeline des intern synchronen Schaltungsblocks oder nach dem Eintreffen eines neuen Anforderungssignals abgeschaltet wird.

## Claims

1. Asynchronous wrapper having
- at least one input unit which is designed to receive a demand signal from outside and to indicate to the outside the receipt of the demand signal by emitting an associated confirmation signal,
- a delayable timing unit which is designed to repeatedly generate a first timing signal and to emit it to an internally synchronous circuit block associated with the asynchronous wrapper,
**characterised in that**
- the input unit is designed so that, when a demand signal is present, it generates a second timing signal in a defined time relationship with the demand signal and emits it to the internally synchronous circuit block, and
- a timeout unit is provided, connected to the input unit, which is designed to suppress the emission of the first timing signal in favour of the emission of the second timing signal.

2. Asynchronous wrapper according to claim 1, wherein the timeout unit is designed to suppress the emission of the first timing signal in favour of the emission of the second timing signal.

3. Asynchronous wrapper according to claim 1 or 2, wherein the timeout unit is designed to emit a control signal to unblock the emission of the first timing signal once a predetermined period of time has elapsed after the emission of the last second timing signal.

4. Asynchronous wrapper according to one of the preceding claims, which has a timing control unit connected to the timing unit and to the input unit, and which is designed to drive the timing unit to emit a number of timing pulses, the number of timing pulses being less than or equal to the depth of a pipeline of the associated internally synchronous circuit block.

5. Asynchronous wrapper according to claim 4, wherein the timing control unit is designed to send a control signal to the timing unit to stop after the necessary number of timing pulses have been emitted.

6. Asynchronous wrapper according to one of the preceding claims, wherein the input unit is designed to emit a control signal to the internally synchronous circuit block to unblock a data input when a demand signal is present.

7. Asynchronous wrapper according to one of the preceding claims, having at least one output unit which is designed to send a demand signal out and to emit a control signal to the internally synchronous circuit block to unblock a data output in response to receiving a confirmation signal from outside.

8. Asynchronous wrapper according to claims 6 and 7, wherein the input unit and output unit are constructed so as to communicate with the outside through a four-phase handshake protocol.

9. Globally asynchronous, locally synchronous (GALS) circuit, comprising at least one internally synchronous circuit block and, in each case, an associated asynchronous wrapper according to one of the preceding claims.

10. GALS circuit according to claim 9, wherein upstream of a data input of the internally synchronous circuit block there is provided a data latch the operation of which is controlled by the input unit.

11. Method of timing an internally synchronous circuit block of an integrated circuit using an asynchronous wrapper, wherein the internally synchronous circuit block can be timed by means of a first timing signal which can be generated by a local timing signal generator, comprising the steps of:
a) delaying the emission of the first timing signal or switching off the local timing generator
b) waiting for the receipt of a demand signal from outside at the input of the asynchronous wrapper
c) emitting a second timing signal from the asynchronous wrapper to the internally synchronous circuit block in a defined time relationship with the receipt of the demand signal and without the aid of the local timing signal generator,
d) waiting for the receipt of the next demand signal from outside and, if necessary, repeating the previous step.

12. Method according to claim 11, wherein, if there is no demand signal over a predetermined period of time (time-out), there is a switchover to the emission of the first timing signal generated by means of the local timing signal generator.

13. Method according to claim 12, wherein the local timing signal generator is switched off after the emptying of a pipeline of the internally synchronous circuit block or after a new demand signal has been received.

## Revendications

1. Circuit global asynchrone comprenant :
- au moins une unité d'entrée, laquelle est conçue afin de recevoir un signal de requête à partir de l'extérieur et d'indiquer la réception du signal de requête par l'émission d'un signal de confirmation correspondant vers l'extérieur,
- une unité cadencée pouvant être interrompue, laquelle est conçue afin de générer de manière répétée un premier signal d'impulsions et de transmettre celui-ci au bloc circuit synchrone interne, coordonné au circuit global asynchrone, **caractérisé en ce que**
- l'unité d'entrée est conçue afin de générer un second signal d'impulsions en relation définie dans le temps avec le signal de requête, lors de l'occurrence d'un signal de requête, et de transmettre celui-ci au bloc circuit synchrone interne, et **en ce que**
- une unité de temporisation reliée à l'unité d'entrée est prévue, laquelle est conçue afin d'atténuer l'émission du premier signal d'impulsions au profit de l'émission du second signal d'impulsions.

2. Circuit global asynchrone selon la revendication 1, dans lequel l'unité de temporisation est conçue afin d'atténuer l'émission du premier signal d'impulsions au profit de l'émission du second signal d'impulsions.

3. Circuit global asynchrone selon la revendication 1 ou 2, dans lequel l'unité de temporisation est conçue afin de transmettre un signal de commande déclenchant l'émission du premier signal d'impulsions avec l'écoulement d'une période de temps prédéterminée après l'émission du second et dernier signal d'impulsions.

4. Circuit global asynchrone selon l'une des revendications précédentes, lequel comporte une unité de commande d'impulsions reliée à l'unité cadencée et à l'unité d'entrée, laquelle est conçue afin d'actionner l'unité cadencée pour émettre une quantité d'impulsions de synchronisation, par laquelle la quantité d'impulsions de synchronisation est inférieure ou égale à la profondeur d'un pipeline du bloc circuit synchrone interne correspondant.

5. Circuit global asynchrone selon la revendication 4, dans lequel l'unité de commande d'impulsions est conçue afin d'envoyer un signal de commande à l'unité cadencée en vue de l'arrêt après l'émission de la quantité nécessaire d'impulsions de synchronisation.

6. Circuit global asynchrone selon l'une des revendications précédentes, dans lequel l'unité d'entrée est conçue afin de transmettre, lors de l'occurrence d'un signal de requête, un signal de commande vers le bloc circuit synchrone interne, en vue de la libération d'une entrée de données.

7. Circuit global asynchrone l'une des revendications précédentes, ayant au moins une unité de sortie, laquelle est conçue afin d'envoyer un signal de requête vers l'extérieur et, sur réception d'un signal de confirmation à partir de l'extérieur, de transmettre un signal de commande au bloc circuit synchrone interne, en vue de la libération d'une sortie de données.

8. Circuit global asynchrone selon les revendications 6 et 7, dans lequel l'unité d'entrée et l'unité de sortie sont conçues afin de communiquer avec l'extérieur par l'intermédiaire d'un protocole d'établissement de liaison à quatre phases.

9. Circuit CALS globalement asynchrone localement synchrone, comprenant au moins un bloc circuit synchrone interne et un circuit global asynchrone correspondant selon l'une des revendications précédentes.

10. Circuit CALS selon la revendication 9, dans lequel un circuit à verrouillage de données est montée en série avec une entrée de données du bloc circuit synchrone interne, dont le fonctionnement est commandé par l'unité d'entrée.

11. Procédé destiné à cadencer un bloc circuit synchrone interne d'un circuit intégré à l'aide d'un circuit global asynchrone, dans lequel le bloc circuit synchrone interne peut être cadencé à l'aide d'un premier signal d'impulsions, pouvant être généré à partir d'un générateur de signal d'impulsions local, comportant les étapes consistant à :
a) interrompre l'émission du premier signal d'impulsions ou déconnecter le générateur d'impulsions local
b) attendre la réception d'un signal de requête à partir de l'extérieur au niveau de l'entrée du circuit global asynchrone
c) émettre un second signal d'impulsions à partir du circuit global asynchrone vers le bloc circuit synchrone interne en relation définie dans le temps, en vue de la réception du signal de requête, et sans l'aide du générateur de signal d'impulsions local,
d) attendre la réception d'un signal de requête suivant à partir de l'extérieur et répétition éventuelle de l'étape précédente.

12. Procédé selon la revendication 11, dans lequel, lors de l'absence d'un signal de requête dans une période de temps prédéfinie (temporisation), une commutation sur une émission d'un premier signal d'impulsions généré survient à l'aide du générateur de signal d'impulsions local.

13. Procédé selon la revendication 12, dans lequel le générateur de signal d'impulsions local est déconnecté après évacuation d'un pipeline du bloc circuit synchrone interne ou après l'arrivée d'un nouveau signal de requête.
